# EUROPÄISCHE PATENTSCHRIFT

(11) **EP 2 156 754 B1**
(45) Veröffentlichungstag und Bekanntmachung des Hinweises auf die Patenterteilung: **19.10.2011**
(21) Anmeldenummer: 09010357.3
(22) Anmeldetag: 12.08.2009
(51) Int. Cl.: A23L 1/317, A22C 13/00

(54) **Verfahren zur Herstellung von Rohwurst mit verkürzter Reifezeit**
Method for producing raw sausage with shortened maturing time
Procédé de fabrication de saucisse non séchée ayant une durée de mûrissement réduite

(30) Priorität: 20.08.2008 DE 102008038565
(43) Veröffentlichungstag der Anmeldung: 24.02.2010
(73) Patentinhaber: Kalle GmbH, 65203 Wiesbaden (DE)
(72) Erfinder: Wilfer, Robert, 33775 Versmold (DE)
(74) Vertreter: Plate, Jürgen

(56) Entgegenhaltungen:
- EP-A- 1 668 988
- WO-A-00/75220
- WO-A-97/49302
- WO-A-2005/002848
- DE-A1- 10 320 327
- DE-A1- 10 343 409
- DE-A1- 19 507 578
- GB-A- 1 397 472
- US-A- 5 852 114

## Beschreibung

Die Erfindung betrifft ein Verfahren zur beschleunigten Reifung von Rohwurst, sowie die Verwendung von speziellen Hüllen für diesen Zweck.

Rohwürste sind in den Leitsätzen des Deutschen Lebensmittelbuchs definiert als "umgerötete, ungekühlt lagerfähige, in der Regel roh zum Verzehr gelangende Wurstwaren. Sie sind mit einer mit Austrocknung verbundenen Reifung von rohem Fleisch schnittfest oder streichfähig geworden". Es wird unterschieden in schnittfeste Rohwurst (z.B. Salami, Plockwurst, Cervelatwurst oder Landjäger) und streichfähige Rohwurst (z.B. Teewurst oder Mettwurst).

Bei der Reifung wird unterschieden zwischen einer langsamen, einer normalen und einer schnellen Reifung. Bei der Schnellreifung wird zum Umröten üblicherweise Glucono-δ-lacton zugemischt, das den pH-Wert im Brät innerhalb von wenigen Stunden herabsetzt (auf etwa pH 5,6). Die Säuerung kann auch durch den Zusatz von Zucker zum Brät beschleunigt werden.

Üblicherweise benötigt eine normal gereifte Rohwurst zum Reifen etwa 14 bis 20 Tage, je nach ihrem Durchmesser und der Art der Reifung, bis sie verkaufsfertig ist. Die langsame Reifung 4 bis 8 Wochen und mehr.

Die Reifung ist beendet, wenn der Wassergehalt eine bestimmte Grenze unterschritten hat. Es ist bekannt, daß Fleisch und Wustbrät in dem Zeitraum bis zum Erreichen des isoelektrischen Punkts am schnellsten Wasser abgeben, d.h. in einem Zeitraum, in dem der pH-Wert von etwa 5,8 auf etwa 5,3 sinkt. Bei dem pH-Wert von 5,3 (isoelektrischer Punkt des Fleisches) bilden die Fleischproteine ein Gel, was die weitere Wasserabgabe beeinträchtigt. Der Zeitraum bis zum Erreichen des isoelektrischen Punktes bzw. des Punktes der maximalen Koagulation der Fleischproteine ist daher optimal für die Trocknung der Wurst.

Um eine möglichst schnelle Abnahme des Wassergehalts zu erreichen, werden Hüllen mit einer Wasserdampfdurchlässigkeit von 600 bis etwa 1600 g pro m² und Tag eingesetzt. Das sind in der Regel Cellulosefaserdärme oder Kollagendärme. Diese Hüllen werden auch eingesetzt für die Herstellung von schimmelgereifter Rohwurst, insbesondere von schimmelgereifter Salami.

In den ersten 24 Stunden sinkt der pH-Wert bei der normalen Reifung (also ohne Zusatz von Säuerungsmitteln) kaum ab und bleibt konstant bei etwa 5,8. Durch eine geeignete Temperaturführung kann das Absinken des pH-Wert noch weiter verlangsamt werden. In dieser Zeitspanne gibt die Wurst Wasser ab, das als Wasserdampf durch die Hülle entweicht.

Während der sogenannten Fermentationsphase wird bei den bisherigen Verfahren die Luftfeuchte auf etwa 90 bis 95 % eingestellt. Zudem ist die Temperatur in der Reifekammer zunächst leicht erhöht, damit sich die Starterkulturen schneller entwickeln. Als Starterkulturen dienen insbesondere säuernde homofermentative Milchsäurebakterien (Lactobacillus- oder Pediococcus-Arten) oder nitratreduzierende Staphylococcus- oder Micrococcus-Arten. Danach wird die relative Luftfeuchte in der Reifekammer auf etwa 80 bis 90 % herabgesetzt. Die Nachreifung (bei normal gereifter Rohwurst typischerweise ab dem 10. Tag nach der Herstellung) erfolgt dann bei etwa 75 % relativer Luftfeuchte. Bei der Reifung verliert die Wurst etwa 22 bis 35 % ihres Gewichts durch den Entzug von Wasser.

Die Wasserdampfdurchlässigkeit der üblichen Hüllen ist so hoch, daß es bei nicht gänzlich optimalen Reifebedingungen zu einer übermäßigen Abtrocknung der äußeren Bereiche der Wurst kommt, d.h. es bildet sich ein sogenannter Trockenrand. Die Luftfeuchtigkeit wird daher in der Anfangsphase der Trocknung sehr hoch gehalten, in der Regel oberhalb von 90 %. Wenn sich ein Trockenrand erst einmal gebildet hat, verlangsamt er die weitere Austrocknung der Wurst. Bei einem pH-Wert am isoelektrischen Punkt gibt das Wurstbrät Wasser leicht ab, zugleich beginnt beim Erreichen dieses Punkts eine Gelbildung der Fleischproteine, die der Wasserabgabe entgegenwirkt. Für eine Abtrocknung am besten geeignet ist daher der Zeitraum bis zum Erreichen des isoelektrischen Punkts. Mit den bisher üblichen, hoch durchlässigen Hüllen kann der Zeitraum bis zum Erreichen des isoelektrischen Punktes nur unzureichend ausgenutzt werden.

WO 00/75220 offenbart die Herstellung einer Salami in einer Wursthülle mit eines Wasserdampfdurchlässigkeit von 500 g/m²/24h (ASTM E96 BW). Die relative Luftfenchte während der Herstellung ist nicht offenbarf.

Es bestand daher die Aufgabe, ein Verfahren zur beschleunigten Reifung von Rohwurst zur Verfügung zu stellen, das ohne den Zusatz von Glucono-δ-lacton oder anderen Säuerungsmitteln auskommt und in kürzerer Zeit als bisher möglich zu einem verkaufsfähigen, qualitativ hochwertigen Produkt ohne Trockenrand führt.

Überraschenderweise wurde nunmehr gefunden, daß sich mit Hüllen, die eine Wasserdampfdurchlässigkeit von weniger als 600 g/m² d aufweisen, das erwünschte schnellere Reifen erzielen läßt, wenn zugleich die Luftfeuchtigkeit am Beginn der Reife bis zum Erreichen des isoelektrischen Punkts auf maximal 60 % relativer Feuchte (r.F.) vermindert wird. Allgemein kann diese relative Feuchte bei einer Temperatur von 4 bis 55 °C eingestellt werden, bevorzugt ist jedoch eine Temperatur von etwa 12 bis 18 °C. In dem bevorzugten Temperaturbereich ist das Wachstum von Mikroorganismen verzögert, so daß der isoelektrische Punkt später erreicht wird. Bei den bisher üblichen, hoch durchlässigen Hüllen führen solche Bedingungen unweigerlich zur Bildung von unerwünschten Trockenrändern.

Gegenstand der vorliegenden Erfindung ist demgemäß ein Verfahren zur Reifung von Rohwürsten, **dadurch gekennzeichnet, daß** die Reifung in einer Hülle mit einer Wasserdampfdurchlässigkeit von weniger als 600 g/m² d bei einer relativen Luftfeuchte von weniger als 60 % durchgeführt wird. Die genannte Luftfeuchte sollte von der Herstellung der Wurst bis zum Erreichen des isoelektrischen Punkts, d.h. etwa maximal 72 Stunden danach, eingehalten werden.

Vorzugsweise beträgt die Wasserdampfdurchlässigkeit der Hülle etwa 50 bis 400 g/m² d, besonders bevorzugt 70 bis 300 g/m² d, speziell 80 bis 200 g/m² d, insbesondere etwa 110 g/m² d.

In dem erfindungsgemäßen Verfahren lassen sich Hüllen aus verschiedenen Materialien einsetzen. Bevorzugt sind ein- oder mehrschichtige Hüllen auf Basis von thermoplastischen Kunststoffen. Das sind beispielsweise Hüllen aus einem Gemisch, das aliphatische Polyamide und/oder aliphatische Copolyamide und zusätzlich mindestens ein organisches Polymer mit einer hohen Wasserlöslichkeit (mehr als 20 g in 1 Liter Wasser von 80 °C) umfaßt, wie sie in der DE 103 20 327 offenbart sind. Das Polymer mit hoher Wasserlöslichkeit ist beispielsweise ein Polyvinylpyrrolidon oder ein Copolymer mit Vinylpyrrolidon-Einheiten, ein Polyvinylalkohol, ein Polyalkylenoxid (beispielsweise Polyethylenglykol oder Polypropylenglykol), ein Celluloseether, Poly(meth)acrylsäure oder ein Copolymer mit (Meth)acrylsäure-Einheiten. Wie üblich, steht "(Meth)acrylsäure" für "Acrylsäure und/oder Methacrylsäure".

De 10320327 nimmt Bezug zur D/N53122 zur Bestimmung des Wasserdampfdurdlässigkeit.

Geeignet, wenngleich weniger bevorzugt, sind auch Cellulose-Faserdärme oder Textildärme, wobei vor allem die Textildärme zusätzlich beschichtet oder bedruckt sind, um die Wasserdampfdurchlässigkeit auf weniger als 500 g/m² d herabzusetzen. Die Beschichtung kann beispielsweise aus einer oder auch mehreren Acrylat-Schichten bestehen.

Die Textildärme umfassen allgemein ein Gewebe, Gewirke, Gestricke oder Gelege, das aus Natur- und/oder Kunstfasern bestehen kann. Bevorzugte Fasermaterialien sind Baumwolle, Regenerat-Cellulose (Zellwolle), Seide, Polyester, Polyamid, Polyolefin (insbesondere Polypropylen), Polyvinylacetat, Polyacrylnitril, Polyvinylchlorid sowie die entsprechenden Copolymere. Auch Gemische verschiedener Materialen lassen sich einsetzen (z.B. Gemische aus Zellwolle und Polyester).

Die Luftfeuchte während der Reifung beträgt bevorzugt 15 bis 50 % r.F., besonders bevorzugt 18 bis 40 % r.F. und insbesondere 20 bis 25 % r.F. Dies führt dazu, daß die Wurst besonders schnell abtrocknet. Ein zu schnelles Trocknen und dadurch die Bildung von Trockenrändern wird durch die verminderte Wasserdampfdurchlässigkeit der Hülle verhindert.

In der Zeitspanne bis zum Erreichen des isoelektrischen Punktes läßt sich eine Rohwurst am effektivsten trocknen. Mit den bisher üblichen Hüllen, die eine sehr hohe Wasserdampfdurchlässigkeit zeigen, kann dieser Zeitraum nicht optimal genutzt werden.

Mit dem erfindungsgemäßen Verfahren läßt sich die Reifung der Rohwurst bis zum verkaufsfähigen Produkt um mindestens 24 h verkürzen.

Gegenstand der vorliegenden Erfindung ist ferner die Verwendung einer schlauchförmigen Hülle mit einer Wasserdampfdurchlässigkeit von weniger als 600 g/m² d bei der Reifung von Rohwurst, insbesondere bei der Reifung bei einer relativen Luftfeuchte von weniger als 60%, insbesondere weniger als 50 %

wobei eine relative Luftfenchte von weniger als 60% von der Herstellung der Wurst bis zum Erreichen des isoelektrischen Punkts eingehalten wird.

Die nachfolgenden Beispiele dienen zur Illustration der Erfindung. Prozente sind darin als Gewichtsprozente zu verstehen, soweit nicht anders angegeben oder aus dem Zusammenhang unmittelbar ersichtlich.

Beispiel 1 (Vergleichsbeispiel):

Ein Cellulose-Faserdarm mit einer Wasserdampfdurchlässigkeit von 950 g/(m² · d) wurde mit Salami-Brät bis zu einem Füllkaliber von 63 mm gefüllt. Die Wurst wurde dann, wir bisher üblich, "normal" gereift. Dazu wurde sie in einer Reifekammer bis zum 2. Tag nach dem Füllen bei einer Temperatur von 18 bis 20 °C und einer relativen Luftfeuchte von 90 bis 95 % gehalten. Vom 3. bis zum 10. Tag war die relative Luftfeuchte auf 80 bis 90 % bei etwa 18 °C eingestellt. Ab dem 11. Tag betrug die relative Luftfeuchte dann nur noch 75 % und die Temperatur etwa 15 °C.

Insgesamt zeigte die Wurst einen Gewichtsverlust von 10 % innerhalb der ersten 72 Stunden. Nach 20 Tagen lag der Gewichtsverlust bei dem für das verkaufsfähige Produkt gewünschten Wert von 27 %.

### Beispiel 2:

Verwendet wurde eine Hülle auf Basis von aliphatischen Polyamiden (PA 6), wobei das Polyamid mit Polyvinylpyrrolidon abgemischt ist. Die Hülle hatte eine Wasserdampfdurchlässigkeit von 90 g/m² d.

Gefüllt wurde die Hülle mit Salami-Brät bis zu einem Füllkaliber von 63 mm. Die Reifung erfolgte dann bei 20 bis 25 % relativer Feuchte. Die Temperatur wurde dabei vom Füllen bis zum 2. Tag nach dem Füllen bei 14 °C gehalten, danach (d.h. vom 3 bis zum 17. Tag) bei 18 bis 20 °C.

Ab dem 3. Tag nach dem Füllen lag die Trocknungsrate konstant bei 0,2 % pro Stunde; der Gewichtsverlust nach Ablauf dieser Zeitspanne betrug 14,4 %. Ab dem 3. Tag ging die Trocknungsrate auf 0,08 % pro Stunde zurück. Nach weiteren 6,6 Tagen betrug der Gewichtsverlust 27 % und hatte damit den gewünschten Wert erreicht.

Insgesamt betrug die Reifedauer bis zum verkaufsfähigen Produkt damit nur noch 17,7 Tage, also 2,3 Tage weniger als nach dem bisherigen Verfahren.

## Patentansprüche

1. Verfahren zur Reifung von Rohwürsten, **dadurch gekennzeichnet, daß** die Reifung in einer Hülle mit einer Wasserdampfdurchlässlgkelt von weniger als 600 g/m² d bei einer relativen Luftfeuchte von weniger als 60 % durchgeführt wird, wobei eine relative Luftfeuchte von weniger als 60 % von der Herstellung der Wurst bis zum Erreichen des isoelektrischen Punkts eingehakten wird.

2. Verfahren gemäß Anspruch 1, **dadurch gekennzeichnet, daß** die Hülle eine Wasserdampfdurchlässigkeit von 50 bis 400 g/m² d, bevorzugt 70 bis 300 g/m² d, besonders bevorzugt 80 bis 200 g/m² d, und insbesondere von etwa 110 g/m² d aufweist.

3. Verwendung einer schlauchförmigen Hülle mit einer Wasserdampfdurchlässigkeit von weniger als 600 g/m² d bei der Herstellung von normal gereifter Rohwurst, wobei eine relative Luftfeuchte von weniger als 60 % von der Herstellung der Wurst bis zum Erreichen des isoelektrischen Punkts eingehalten wird,

4. Verwendung gemäß Anspruch 3, **dadurch gekennzeichnet, daß** die schlauchförmige Hülle eine ein- oder mehrschichtige Hülle auf Basis von thermoplastischen Kunststoffen ist.

5. Verwendung gemäß Anspruch 3, **dadurch gekennzeichnet, daß** die schlauchförmige Hülle ein beschichteter oder bedruckter Textildarm ist.

6. Verwendung gemäß Anspruch 5, **dadurch gekennzeichnet, daß** der Textildarm ein Gewebe, Gewirke, Gestricke oder Gelege aus Natur- und/oder Kunstfaser umfaßt.

## Claims

1. A process for ripening raw sausages which comprises carrying out the ripening in a casing having a water vapor permeability of less than 600 g/m² d at a relative humidity of less than 60 %, a relative humidity of less than 60 % being maintained from production of the sausage up to reaching the isoelectric point.

2. The process as claimed in claim 1, wherein the casing has a water vapor permeability of 50 to 400 g/m² d, preferably 70 to 300 g/m² d, particularly preferably 80 to 200 g/m² d, and in particular about 110 g/m² d.

3. The use of a tubular casing having a water vapor permeability of less than 600 g/m² d in the production of conventionally ripened raw sausage, a relative humidity of less than 60 % being maintained from production of the sausage up to reaching the isoelectric point.

4. The use as claimed in claim 3, wherein the tubular casing is a single-layered or multilayered casing based on thermoplastics.

5. The use as claimed in claim 3, wherein the tubular casing is a coated or printed textile skin.

6. The use as claimed in claim 5, wherein the textile skin comprises a woven fabric, loop-formingly knitted fabric, loop-drawingly knitted fabric, or nonwoven fabric made of natural and/or synthetic fibers.

## Revendications

1. Procédé de maturation de saucisses sèches, **caractérisé en ce que** la maturation est réalisée dans une enveloppe présentant une perméabilité à la vapeur d'eau inférieure à 600 g/m²d en présence d'une humidité relative de l'air inférieure à 60 %, dans lequel une humidité relative de l'air inférieure à 60 % est maintenue de la fabrication de la saucisse jusqu'à l'atteinte du point isoélectrique.

2. Procédé selon la revendication 1, **caractérisé en ce que** l'enveloppe présente une perméabilité à la vapeur d'eau de 50 à 400 g/m²d, de préférence de 70 à 300 g/m²d, de manière plus particulièrement préférée de 80 à 200 g/m²d et, en particulier, d'environ 110 g/m²d.

3. Utilisation d'une enveloppe tubulaire présentant une perméabilité à la vapeur d'eau inférieure à 600 g/m²d dans la fabrication de saucisses sèches ayant une maturation normale, dans laquelle une humidité relative de l'air inférieure à 60 % est maintenue de la fabrication de la saucisse jusqu'à l'atteinte du point isoélectrique.

4. Utilisation selon la revendication 3, **caractérisée en ce que** l'enveloppe tubulaire est une enveloppe à une ou plusieurs couches à base de matières synthétiques thermoplastiques.

5. Utilisation selon la revendication 3, **caractérisée en ce que** l'enveloppe tubulaire est un boyau textile revêtu ou imprimé.

6. Utilisation selon la revendication 5, **caractérisée en ce que** le boyau textile comprend un tissu, un tissu à mailles, un tricot ou un non-tissé en fibres naturelles et/ou synthétiques.
